# EUROPÄISCHE PATENTSCHRIFT

(11) **EP 0 861 941 B1**
(45) Veröffentlichungstag und Bekanntmachung des Hinweises auf die Patenterteilung: **27.11.2002**
(21) Anmeldenummer: 98101940.9
(22) Anmeldetag: 05.02.1998
(51) Int. Cl.: D21G 1/02, D21F 5/02

(54) **Walzenanordnung**
Roller arrangement
Agencement de rouleau

(30) Priorität: 27.02.1997 DE 19707876
(43) Veröffentlichungstag der Anmeldung: 02.09.1998
(73) Patentinhaber: Voith Paper Patent GmbH, 89522 Heidenheim (DE)
(72) Erfinder: van Haag, Rolf, Dr.-Ing., 47647 Kerken (DE)
(74) Vertreter: Knoblauch, Andreas, Dr.-Ing.

(56) Entgegenhaltungen:
- EP-A- 0 567 875
- EP-A- 0 844 084
- DE-A- 2 400 615
- DE-A- 4 410 675
- DE-A- 19 513 500

## Beschreibung

Die Erfindung betrifft eine Walzenanordnung mit einer Walze, die eine Hohlraumanordnung aufweist, und einer von außen auf die Walze wirkenden Heizeinrichtung.

Eine derartige Walzenanordnung ist aus DE 44 10 675 A1 bekannt.

Derartige Walzenanordnungen werden in der Regel gemeinsam mit anderen Walzen eingesetzt, um eine Materialbahn, insbesondere eine Papierbahn, mit Druck und Wärme zu beaufschlagen, um bestimmte Eigenschaften der Bahn zu verbessern. Bei einer Papierbahn handelt es sich beispielsweise um die Erzeugung von Glanz und/oder Glätte oder auch die Verdichtung der Papierbahn.

Durch die Heizeinrichtung werden an der Oberfläche der Walze höhere Temperaturen erzeugt, die dann auf die Materialbahn wirken können. Allerdings dringt die zugeführte Wärme auch in andere Bereiche der Walze vor, die dann sozusagen als Wärmespeicher wirkt. Nach dem Abschalten der Heizeinrichtung dauert es dann eine gewisse Zeit, bis die Walze soweit abgekühlt ist, daß sie gehandhabt werden kann. Eine derartige Handhabung kann beispielsweise dann notwendig sein, wenn die Walze gewechselt werden muß.

Es ist daher bekannt, derartige Walzen mit Kühlwasseranschlüssen zu versehen. Die Walze wird dann zum Abkühlen mit Kühlwasser durchströmt. Hierdurch wird zwar die Wärme relativ schnell abgeführt. Das zugeführte Kühlwasser bewirkt jedoch eine erhebliche Erhöhung des Gewichtes, so daß die Lager entsprechend größer dimensioniert werden müssen. Besonders nachteilig sind jedoch relativ große Temperaturspannungen, die sich aus dem Temperaturunterschied der Walze zu dem einfließenden Kühlwasser ergeben. Darüber hinaus ergeben sich auch unterschiedliche Wärmespannungen in Axialrichtung. Das an einer Seite in die Walze einfließende Wasser hat eine geringere Temperatur, die dann mit zunehmender Durchströmung der Walze ansteigt. Der Aufwand, um diese Temperaturspannungen zu beherrschen, ist relativ hoch.

EP 0 844 084 A1 (Stand der Technik nach Artikel 54(3) EPÜ) zeigt eine Walzenanordnung mit einer Walze, die einen Hohlraum aufweist, in dem eine verdampfbare Flüssigkeit und ein Wärmetauscher angeordnet sind. Die Walze kann von außen durch eine Heizeinrichtung beheizt werden.

EP 0 567 875 A1 beschreibt eine Kühlwalze, die mit Hilfe einer Flüssigkeitsverdampfung gekühlt werden soll. Diese Kühlwalze weist eine verdampfbare Flüssigkeit im Walzeninneren auf, die Wärme vom Walzenmantel an einen Wärmetauscher übertragen kann, der über eine Leitung mit Kühlwasser versorgt werden kann.

DE 24 00 615 A1 zeigt eine Einrichtung zur Temperierung von Walzen, insbesondere von Kalanderwalzen, bei der die Walze einen Hohlraum umschließt, der nahezu vollständig mit einer Flüssigkeit gefüllt ist. Im Hohlraum ist ein wendelförmiger Wärmetauscher angeordnet, der von einer Temperierungsflüssigkeit durchströmt werden kann.

Der Erfindung liegt die Aufgabe zugrunde, die Handhabung einer außenbeheizten Walze zu vereinfachen.

Diese Aufgabe wird bei einer Walzenanordnung der eingangs genannten Art dadurch gelöst, daß in der Hohlraumanordnung eine verdampfbare Flüssigkeit und ein Wärmetauscher angeordnet sind, wobei die Hohlraumanordnung eine Vielzahl von in Umfangsrichtung verteilten, im wesentlichen in Axialrichtung verlaufenden peripheren Bohrungen aufweist.

Wenn die Walze abgekühlt werden soll, dann wird mit Hilfe des Wärmetauschers Wärme aus dem Inneren der Walze abgeführt. Hierzu wird die verdampfbare Flüssigkeit an den heißen Stellen der Walze verdampft. Der heiße Dampf breitet sich gleichmäßig in der Hohlraumanordnung aus und gelangt damit zwangsläufig an den Wärmetauscher, wo er abgekühlt wird. Aufgrund der Temperaturunterschiede zwischen der Walze und dem Wärmetauscher ergibt sich ein entsprechender Druckunterschied zwischen verschiedenen Positionen innerhalb der Walze, der zu einem laufenden Transport des Flüssigkeitsdampfes zu dem Wärmetauscher führt. Auf diese Weise kann die Wärme relativ schnell aus der Walze abgeführt werden und die Walze entsprechend schnell abkühlen. Allerdings ergeben sich über die Länge der Walze und auch über die Umfangsrichtung praktisch keine nennenswerten Temperaturunterschiede, da die verdampfbare Flüssigkeit sozusagen automatisch einen Ausgleich schafft. Bei heißeren Stellen wird entsprechend mehr Flüssigkeit verdampft und somit Wärme abgegeben als bei kälteren Stellen, so. daß sich im Verlauf der Abkühlphase eine gleichmäßige Temperaturverteilung einstellt. Diese Vergleichmäßigung der Temperatur kann man darüber hinaus auch im Betrieb der Walze nutzen, d.h. auch dann, wenn der Wärmetauscher nicht arbeitet. Wenn beispielsweise die Heizeinrichtung die Walze ungleichmäßig aufheizt, wird die Flüssigkeit an den heißeren Stellen verdampfen und dort Wärme abnehmen. An kälteren Stellen wird der Dampf kondensieren oder zumindest Wärme abgeben, so daß durch die Befüllung der Hohlraumanordnung mit einer verdampfbaren Flüssigkeit auch im Betrieb die Temperaturverteilung vergleichmäßigt wird. Wenn der Hohlraum das gesamte Innere der Walze ausfüllt, dann kann dies zu dem Nachteil führen, daß sich die Walze bei hohen Temperaturen und daraus folgenden hohen Dampfdrücken im Inneren aufbombiert. Wenn man nun die Flüssigkeit mit ihrer Flüssigkeits- und ihrer Dampfphase durch die peripheren Bohrungen leitet, dann tritt dieser Nachteil nicht auf. Trotzdem kann man einerseits im Betrieb eine gleichmäßige Temperaturverteilung erreichen und andererseits beim Abkühlen eine schnelle Wärmeabfuhr ohne größere Temperaturspannungen.

Hierbei ist besonders bevorzugt, daß in allen Betriebszuständen sowohl die Flüssigkeitsphase als auch die Gasphase der Flüssigkeit in der Hohlraumanordnung vorhanden ist. Die Hohlraumanordnung ist also nie vollständig mit Flüssigkeit gefüllt und auch nie vollständig mit Dampf. Da die Betriebszustände der Walze im allgemeinen bekannt sind, kann man die Menge der einzufüllenden verdampfbaren Flüssigkeit unter Berücksichtigung vor allem der zu erwartenden Temperaturen dimensionieren. Unter "Betriebszustände" sollen alle Zustände verstanden werden, denen die Walze ausgesetzt ist. Hierunter fällt also auch vor der Aufnahme des Betriebs der Zustand, in dem die Walze der Umgebungstemperatur ausgesetzt ist und dementsprechend Umgebungstemperatur angenommen hat.

Mit Vorteil weist die Hohlraumanordnung einen Evakuierungsanschluß auf. Mit Hilfe des Evakuierungsanschlusses kann in der Hohlraumanordnung ein Unterdruck erzeugt werden, also ein Druck, der unter Atmosphärendruck liegt. Da die Verdampfungstemperatur der Flüssigkeit auch vom Druck abhängt, kann man dadurch bewirken, daß die Flüssigkeit bereits bei niedrigeren Temperaturen verdampft. Damit wird es möglich, die Walze mit Hilfe des Wärmetauschers auch unter die Verdampfungstemperatur der Flüssigkeit bei Atmosphärendruck abzukühlen. Wenn als verdampfbare Flüssigkeit Wasser verwendet wird, ist es auf diese Weise möglich, die Walze auch unter die Temperatur von 100° C abzukühlen, beispielsweise auf 70° C.

Auch ist von Vorteil, wenn die Temperatur des Wärmetauschers auf eine Temperatur unterhalb der Kondensationstemperatur der Flüssigkeit absenkbar ist. Die Flüssigkeit kondensiert dann nicht nur am Wärmetauscher, sondern sie wird noch weiter abgekühlt, d.h. ihre Temperatur sinkt weiter ab. Wenn nun die so stärker abgekühlte Flüssigkeit wieder an die heißen Stellen der Walze gelangt, kann sie eine entsprechend höhere Wärmemenge aufnehmen. Die zugeführte Wärme muß nämlich zunächst die Flüssigkeit auf die Verdampfungstemperatur aufheizen und dann noch verdampfen. Hierdurch läßt sich die Abkühlung der Walze noch beschleunigen.

Vorzugsweise rotiert der Wärmetauscher. Er kann beispielsweise mit der Walze zusammen rotieren. Dies ist aber nicht unbedingt erforderlich. Wenn der Wärmetauscher rotiert, dann schleudert er die Flüssigkeit, die an ihm kondensiert, aufgrund der Zentrifugalkraft wieder radial nach außen. Von dort soll aber auch hauptsächlich Wärme abgeführt werden. Durch den zwangsweise erfolgenden Flüssigkeitstransport zur Außenwand der Walze hin wird die Abkühlung der Walze weiter beschleunigt.

Vorzugsweise ist dem Wärmetauscher ein Kühlmedium von außen durch einen Drehanschluß zuführbar. Das Kühlmedium, beispielsweise eine Kühlflüssigkeit, wie Wasser, kann größere Mengen an Wärme aufnehmen und diese Wärme auch relativ schnell nach außen transportieren. Ein Drehanschluß für Flüssigkeiten läßt sich leichter abdichten als eine Dichtungszone für Gase, d.h. den Flüssigkeitsdampf. Durch die Kombination dieser Maßnahmen wird also eine gute Dichtigkeit bei schneller Wärmeabfuhr erreicht.

Vorzugsweise weist die Hohlraumanordnung einen Hohlraum auf, der das Innere der Walze ausfüllt. Die Walze wird also im wesentlichen durch einen Walzenmantel oder ein Walzenrohr gebildet. Die Flüssigkeit gelangt dann an den Walzenmantel und bildet im Prinzip aufgrund der Zentrifugalkraft einen Flüssigkeitsfilm mit einer Dicke von wenigen Millimetern aus. Da die Flüssigkeit an heißeren Stellen stärker verdampft und an kälteren Stellen kondensiert, wobei die Verdampfungs- und Kondensationstemperaturen auch vom Druck im Hohlraum abhängen, ergibt sich dadurch im Betrieb eine gleichmäßige Temperaturverteilung im Walzenrohr. Bei der Abkühlung, wenn über den Wärmetauscher Wärme nach außen abgeführt wird, sinkt mit dem Druck auch die Kondensations- bzw. Verdampfungstemperatur, ohne daß jedoch die Gleichmäßigkeit der Temperaturverteilung darunter leidet.

Mit Vorteil ist der Wärmetauscher im Hohlraum angeordnet und die peripheren Bohrungen stehen mit dem Hohlraum in Verbindung. Man kombiniert also den Hohlraum mit den peripheren Bohrungen. Im Hohlraum steht genügend Raum für den Wärmetauscher zur Verfügung. Durch die Verbindung zwischen den peripheren Bohrungen und dem Hohlraum läßt sich auch der Wärmetransport von der Walze zu dem Wärmetauscher leicht und zuverlässig bewerkstelligen.

Hierbei ist besonders bevorzugt, daß der Hohlraum in Axialrichtung eine begrenzte Erstreckung aufweist. Wenn man die Erstreckung des Hohlraumes in Axialrichtung begrenzt, dann begrenzt man auch den Bereich, in dem der Druck im Innern der Walze zu Kräften nach außen führen kann. Mit anderen Worten wird vermieden, daß sich die Walze in der Mitte aufweitet und bombiert. Im Bereich der axialen Enden sind die Drücke leichter beherrschbar, weil hier über die Stirnseiten der Walze "Haltekräfte" wirken, die den Drücken im Innern entgegenwirken. Insbesondere in Kombination mit den peripheren Bohrungen läßt sich dann die gewünschte Stabilität der Walze auch bei höheren Temperaturen erzielen.

Vorzugsweise weist die Walze eine Zapfeneinheit mit einem Zapfen auf, mit dem sie drehgelagert ist, und der Wärmetauscher ist in der Zapfeneinheit angeordnet. Dies hat vor allem Vorteile bei der Herstellung der Walze. Die Zapfeneinheit kann dann komplett montiert in das Walzenrohr eingesetzt werden. Damit ist sowohl der Wärmetauscher als auch die Lagermöglichkeit für die Walze erzeugt.

Hierbei ist besonders bevorzugt, daß die Walze ein Walzenrohr aufweist, in das die Zapfeneinheit soweit hineinragt, daß sie Mündungen der peripheren Bohrungen überdeckt, wobei der Hohlraum in der Zapfeneinheit ausgebildet ist und der Hohlraum in Axialrichtung zum Inneren des Walzenrohres abgeschlossen ist. Damit begrenzt man den Hohlraum in Axialrichtung, so daß ein Druckanstieg im Hohlraum nicht zu einem Bombieren der Walze führen kann. Andererseits wird ermöglicht, daß der Hohlraum noch mit den peripheren Bohrungen im Walzenrohr in Verbindung steht. Die Abdichtung zwischen der Zapfeneinheit und dem Walzenrohr ist relativ einfach zu bewerkstelligen.

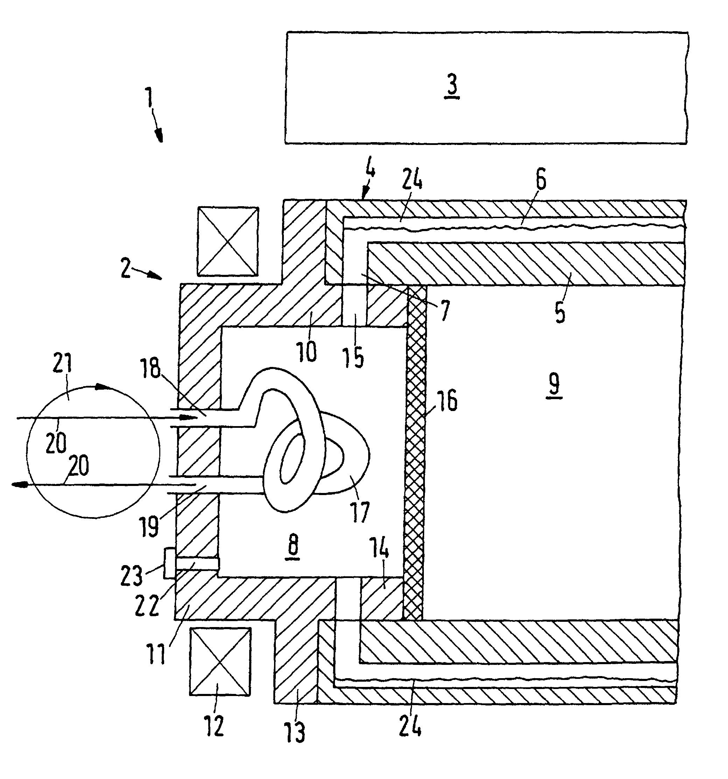

Die Erfindung wird im folgenden anhand eines bevorzugten Ausführungsbeispiels in Verbindung mit der Zeichnung beschrieben. Hierin zeigt die
- einzige Figur: eine schematische Schnittansicht durch eine Walzenanordnung.

Eine Walzenanordnung 1 weist eine Walze 2 und eine Heizeinrichtung 3 auf, die die Walze 2 von außen beheizt. Die Heizeinrichtung 3 wirkt also auf die Umfangsfläche 4 der Walze 2. Die Heizeinrichtung 3 kann beispielsweise als induktive Heizung ausgebildet sein, so daß es sich bei der Walze 2 um eine induktiv beheizte Walze handelt. Andere Beheizungsarten sind ebenfalls möglich.

Die Walze 2 weist ein Walzenrohr 5 auf, das auch als Walzenmantel bezeichnet werden kann. In das Walzenrohr 5 sind in Umfangsrichtung verteilt mehrere achsparallel verlaufende periphere Bohrungen 6 eingebracht, von denen zwei aus der Schnittansicht der Figur ersichtlich sind. Die Bohrungen 6 stehen über radial verlaufende Stichkanäle 7 mit der radialen Innenwand des Walzenrohres 5 in Verbindung und zwar im Bereich des axialen Endes des Walzenrohres 5.

Dargestellt ist lediglich ein Ende der Walzenanordnung 1. Das andere axiale Ende sieht im wesentlichen genauso aus. Abweichungen werden weiter unten besprochen.

Das Walzenrohr 5 umgibt einen Innenraum 9. In den Innenraum 9 ist von der axialen Stirnseite her eine Zapfeneinheit 10 eingesetzt. Die Zapfeneinheit 10 weist einen Zapfen 11 auf, der in einem Lager 12 drehbar gelagert ist. Die Zapfeneinheit weist ferner axial weiter innen liegend einen umlaufenden Flansch 13 auf, der an der axialen Stirnseite des Walzenrohres 5 anliegt. Die Zapfeneinheit 10 erstreckt sich mit einem Zylindervorsprung 14 so weit in den Innenraum 9 des Walzenrohres 5 hinein, daß radiale Bohrungen 15 mit den Stichkanälen 7 in Überdeckung stehen. Am Zylindervorsprung 14 ist eine Abdeckung 16 angebracht, die die Zapfeneinheit 10 zum Innenraum 9 hin abschließt. Die Verbindung von Zapfeneinheit 10 und Walzenrohr 5 ist gasdicht ausgeführt.

Die Zapfeneinheit 10 umschließt einen Hohlraum 8. In diesem Hohlraum 8 ist ein Wärmetauscher 17 angeordnet, der im vorliegenden Fall die Form eines schraubenlinienförmig gebogenen Rohres aufweist. Andere Formen sind möglich. Ziel ist es, daß der Wärmetauscher 17 eine möglichst große Oberfläche im Hohlraum 8 aufweist.

Schematisch dargestellt ist, daß der Wärmetauscher 17 eine Zuführleitung 18 und eine Abführleitung 19 für ein Kühlmedium (Pfeile 20) aufweist. Die Zuführ- und die Abführleitung 18, 19 sind durch eine Drehdurchführung 21 mit einer nicht näher dargestellten Versorgungseinrichtung verbunden.

Am anderen Ende der Walze 2 ist ebenfalls ein Hohlraum 8 vorgesehen. Dort kann, muß aber nicht, ein weiterer Wärmetauscher 17 angeordnet sein.

Der Hohlraum 8 und die peripheren Bohrungen 6 bilden zusammen mit den verbindenden Stichkanälen 7 und Bohrungen 15 eine Hohlraumanordnung, wobei die Bohrungen 6 über den Hohlraum 8 miteinander in Verbindung stehen und zwar an beiden axialen Enden der Walze 2. Am anderen, nicht dargestellten Ende reicht auch ein Ringkanal zur Verbindung der Bohrungen 9 aus.

In der Hohlraumanordnung 6, 8 befindet sich nun eine verdampfbare Flüssigkeit 24, beispielsweise Wasser. Die Hohlraumanordnung 6, 8 ist flüssigkeits- und gasdicht ausgeführt. Dadurch bleibt die Flüssigkeit in einem geschlossenen System, auch wenn sie durch Zufuhr von Wärme teilweise verdampft. Dargestellt ist, daß die Flüssigkeit 24 aufgrund der Zentrifugalkraft radial außen an den Wänden der Bohrungen 6 anliegt.

Die Menge der eingebrachten Flüssigkeit sollte so bemessen sein, daß sich immer Flüssigkeit in der Hohlraumanordnung 6, 8 befindet, andererseits sich aber auch noch ein freies, d.h. nicht mit Flüssigkeit gefülltes Volumen innerhalb der Hohlraumanordnung 6, 8 befindet.

Ferner weist die Hohlraumanordnung noch einen Evakuierungsanschluß 22 auf, der von einem Verschluß 23 verschlossen ist. Über den Evakuierungsanschluß 22 kann in der Hohlraumanordnung 6, 8 ein gegenüber atmosphärem Druck verminderter Druck erzeugt werden.

Im Betrieb rotiert die Walze und mit ihr der Wärmetauscher 17. Aufgrund der Zentrifugalkraft wird die Flüssigkeit 24 nach außen gedrückt und liegt dann an der radialen Außenseite der peripheren Bohrungen 6 an. Gleichzeitig wird die Walze 2 durch die Heizeinrichtung 3 beheizt. Durch die Beheizung verdampft die Flüssigkeit und erhöht den Druck in der Hohlraumanordnung 6, 8. Mit der Erhöhung des Druckes steigt die Siedetemperatur, so daß sich ein Gleichgewicht zwischen der Flüssigkeits- und der Gasphase der Flüssigkeit einstellt. Auch dann, wenn die Heizeinrichtung nicht völlig gleichmäßig beheizt, was insbesondere bei induktiven Heizeinrichtungen der Fall ist, weil diese in der Regel mit mehreren, in Axialrichtung nebeneinander liegenden Hohlschuhen ausgerüstet sind, ergibt sich aufgrund der verdampfbaren Flüssigkeit in den peripheren Bohrungen 6 ein relativ gleichmäßiges Temperaturprofil. An den wärmeren Stellen, also dort, wo die Heizeinrichtung 3 intensiver beheizt, verdampft die Flüssigkeit und entzieht dieser Stelle Wärme. Umgekehrt kondensiert die Flüssigkeit an den kälteren Stellen und führt dort die Wärme wieder zu.

Dieser Effekt ist an sich aber bereits unter der Bezeichnung "heat-pipe-Effekt" bekannt.

Wenn nun die Walze abgekühlt werden soll, beispielsweise weil sie ausgetauscht werden muß, wird zunächst die Heizeinrichtung 3 abgeschaltet, so daß keine weitere Wärme zugeführt wird. Danach wird der Wärmetauscher 17 mit einem Kühlmedium, beispielsweise Kühlwasser, durchströmt. Hierbei hat das Kühlmedium bevorzugterweise eine Temperatur, die unter der Kondensationstemperatur der verdampfbaren Flüssigkeit liegt. Dementsprechend kondensiert die verdampfbare Flüssigkeit 24 an dem Wärmetauscher 17. Gegebenenfalls wird sie auch noch unter die Kondensationstemperatur herabgekühlt. Da sich der Wärmetauscher 17 dreht, beispielsweise zusammen mit dem Walzenrohr 5 rotiert, wird die Flüssigkeit, die an ihm kondensiert, sofort wieder nach außen geschleudert und fließt dann unter der Wirkung der Zentrifugalkraft wieder in die peripheren Bohrungen 6 hinein, um dort an der Wandung des Walzenrohres 5 wiederum Wärme aufzunehmen.

Auch während der gesamten Abkühlphase ergibt sich aufgrund des oben beschriebenen Temperaturausgleichs eine sehr gleichmäßige Temperaturverteilung über das Walzenrohr 5, so daß Temperaturspannungen aufgrund ungleichmäßiger Temperaturen an verschiedenen Stellen weitgehend vermieden werden können.

Da der Druck im Hohlraum 8 durch die Abdeckung 16 vom Innenraum 9 ferngehalten wird, der Hohlraum 8 andererseits relativ kleingehalten werden kann, können sich im Innern des Walzenrohres 5 auch keine größeren Drücke aufbauen, gegen die Vorkehrungen getroffen werden müßten. Die Drücke werden im Walzenrohr vielmehr auf die peripheren Bohrungen 6 beschränkt.

## Patentansprüche

1. Walzenanordnung mit einer Walze, die eine Hohlraumanordnung aufweist, und einer von außen auf die Walze wirkenden Heizeinrichtung, **dadurch gekennzeichnet, daß** in der Hohlraumanordnung (6, 8) eine verdampfbare Flüssigkeit und ein Wärmetauscher (17) angeordnet sind, wobei die Hohlraumanordnung (6, 8) eine Vielzahl von in Umfangsrichtung verteilten, im wesentlichen in Axialrichtung verlaufenden peripheren Bohrungen (6) aufweist.

2. Walzenanordnung nach Anspruch 1, **dadurch gekennzeichnet, daß** in allen Betriebszuständen sowohl die Flüssigkeitsphase als auch die Gasphase der Flüssigkeit (24) in der Hohlraumanordnung (6, 8) vorhanden ist.

3. Walzenanordnung nach Anspruch 1 oder 2, **dadurch gekennzeichnet, daß** die Hohlraumanordnung (6, 8) einen Evakuierungsanschluß (22) aufweist.

4. Walzenanordnung nach einem der Ansprüche 1 bis 3, **dadurch gekennzeichnet, daß** die Temperatur des Wärmetauschers (17) auf eine Temperatur unterhalb der Kondensationstemperatur der Flüssigkeit (24) absenkbar ist.

5. Walzenanordnung nach einem der Ansprüche 1 bis 4, **dadurch gekennzeichnet, daß** der Wärmetauscher (17) rotiert.

6. Walzenanordnung nach Anspruch 5, **dadurch gekennzeichnet, daß** dem Wärmetauscher (17) ein Kühlmedium (20) von außen durch einen Drehanschluß (21) zuführbar ist.

7. Walzenanordnung nach einem der Ansprüche 1 bis 6, **dadurch gekennzeichnet, daß** die Hohlraumanordnung (6, 8) einen Hohlraum (8) aufweist, der das Innere der Walze (2) ausfüllt.

8. Walzenanordnung nach einem der Ansprüche 1 bis 7, **dadurch gekennzeichnet, daß** der Wärmetauscher (17) im Hohlraum (8) angeordnet ist und die peripheren Bohrungen (6) mit dem Hohlraum (8) in Verbindung stehen.

9. Walzenanordnung nach Anspruch 8, **dadurch gekennzeichnet, daß** der Hohlraum (8) in Axialrichtung eine begrenzte Erstreckung aufweist.

10. Walzenanordnung nach einem der Ansprüche 1 bis 9, **dadurch gekennzeichnet, daß** die Walze (2) eine Zapfeneinheit (10) mit einem Zapfen (11) aufweist, mit dem sie drehgelagert ist und der Wärmetauscher (17) in der Zapfeneinheit angeordnet ist.

11. Walzenanordnung nach Anspruch 10, **dadurch gekennzeichnet, daß** die Walze (2) ein Walzenrohr (5) aufweist, in das die Zapfeneinheit (10) soweit hineinragt, daß sie Mündungen (7) der peripheren Bohrungen (6) überdeckt, daß der Hohlraum (8) in der Zapfeneinheit (10) ausgebildet ist und daß der Hohlraum (8) in Axialrichtung zum Inneren des Walzenrohres (5) abgeschlossen ist.

## Claims

1. Roll arrangement having a roll which has an arrangement of cavities and a heating device that acts on the roll from the outside, **characterized in that** an evaporable liquid and a heat exchanger (17) are arranged in the arrangement of cavities (6, 8), the arrangement of cavities (6, 8) having a large number of peripheral holes (6) which are distributed in the circumferential direction and run substantially in the axial direction.

2. Roll arrangement according to Claim 1, **characterized in that**, in all operating states, both the liquid phase and the gas phase of the liquid (24) are present in the arrangement of cavities (6, 8).

3. Roll arrangement according to Claim 1 or 2, **characterized in that** the arrangement of cavities (6, 8) has an evacuation connection (22).

4. Roll arrangement according to one of Claims 1 to 3, **characterized in that** the temperature of the heat exchanger (17) can be lowered to a temperature below the condensation temperature of the liquid (24).

5. Roll arrangement according to one of Claims 1 to 4, **characterized in that** the heat exchanger (17) rotates.

6. Roll arrangement according to Claim 5, **characterized in that** a cooling medium (20) can be fed to the heat exchanger (17) from the outside. through a rotary connection (21).

7. Roll arrangement according to one of Claims 1 to 6, **characterized in that** the arrangement of cavities (6, 8) includes a cavity (8) which fills the interior of the roll (2).

8. Roll arrangement according to one of Claims 1 to 7, **characterized in that** the heat exchanger (17) is arranged in the cavity (8), and the peripheral bores (6) are connected to the cavity (8).

9. Roll arrangement according to Claim 8, **characterized in that** the cavity (8) has a limited extent in the axial direction.

10. Roll arrangement according to one of Claims 1 to 9, **characterized in that** the roll (2) has a journal unit (10) with a journal (11), by means of which it is rotationally mounted, and the heat exchanger (17) is arranged in the journal unit.

11. Roll arrangement according to Claim 10, **characterized in that** the roll (2) has a roll tube (5) into which the journal unit (10) projects to such an extent that it covers the mouths (7) of the peripheral bores (6), **in that** the cavity (8) is formed in the journal unit (10), and **in that** the cavity (8) is closed off in the axial direction with respect to the interior of the roll tube (5).

## Revendications

1. Agencement de rouleau avec un rouleau, qui présente un agencement d'espace creux, et un dispositif de chauffage agissant par l'extérieur sur le rouleau, **caractérisé en ce qu'**un liquide vaporisable et un échangeur de chaleur (17) sont disposés dans l'agencement d'espace creux (6, 8), dans lequel l'agencement d'espace creux (6, 8) présente une pluralité de trous périphériques (6), orientés essentiellement dans le sens axial et répartis dans le. sens périphérique.

2. Agencement de rouleau suivant la revendication 1, **caractérisé en ce qu'**aussi bien la phase liquide que la phase gazeuse du liquide (24) est présente dans l'agencement d'espace creux (6, 8) dans toutes les conditions de fonctionnement.

3. Agencement de rouleau suivant la revendication 1 ou 2, **caractérisé en ce que** l'agencement d'espace creux (6, 8) présente un raccord d'évacuation (22).

4. Agencement de rouleau suivant l'une quelconque des revendications 1 à 3, **caractérisé en ce que** la température de l'échangeur de chaleur (17) peut être abaissée à une température inférieure à la température de condensation du liquide (24).

5. Agencement de rouleau suivant l'une quelconque des revendications 1 à 4, **caractérisé en ce que** l'échangeur de chaleur (17) tourne.

6. Agencement de rouleau suivant la revendication 5, **caractérisé en ce qu'**un fluide de refroidissement (20) peut être ajouté par l'extérieur à l'échangeur de chaleur (17) par un raccord tournant (21).

7. Agencement de rouleau suivant l'une quelconque des revendications 1 à 6, **caractérisé en ce que** l'agencement d'espace creux (6, 8) présente un espace creux (8), qui occupe l'intérieur du rouleau (2).

8. Agencement de rouleau suivant l'une quelconque des revendications 1 à 7, **caractérisé en ce que** l'échangeur de chaleur (17) est disposé dans l'espace creux (8) et les trous périphériques (6) sont en communication avec l'espace creux (8).

9. Agencement de rouleau suivant la revendication 8, **caractérisé en ce que** l'espace creux (8) présente une dimension limitée en direction axiale.

10. Agencement de rouleau suivant l'une quelconque des revendications 1 à 9, **caractérisé en ce que** le rouleau (2) présente une unité de tourillon (10) avec un tourillon (11), avec lequel il est supporté en rotation et l'échangeur de chaleur (17) est disposé dans l'unité de tourillon.

11. Agencement de rouleau suivant la revendication 10, **caractérisé en ce que** le rouleau (2) présente un tube de rouleau (5), dans lequel l'unité de tourillon (10) pénètre jusqu'à ce qu'elle recouvre des embouchures (7) des trous périphériques (6), **en ce que** l'espace creux (8) est formé dans l'unité de tourillon (10) et **en ce que** l'espace creux (8) est fermé en direction axiale par rapport à l'intérieur du tube de rouleau (5).
